# EUROPÄISCHE PATENTSCHRIFT

(11) **EP 1 294 066 B1**
(45) Veröffentlichungstag und Bekanntmachung des Hinweises auf die Patenterteilung: **03.11.2010**
(21) Anmeldenummer: 01122019.1
(22) Anmeldetag: 13.09.2001
(51) Int. Cl.: H02G 3/30

(54) **Kabelhalter für Flachbandkabel**
Cable holder for flat cable
Support de cable plat

(43) Veröffentlichungstag der Anmeldung: 19.03.2003
(73) Patentinhaber: Hellermann Tyton GmbH, 25436 Tornesch (DE)
(72) Erfinder: Rathjen, Michael, 25436 Uetersen (DE); Wien, Thomas, 22869 Schenefeld (DE); Matschiner, Bernd, Dr.-Ing., 25495 Kummerfeld (DE)
(74) Vertreter: Glawe, Delfs, Moll

(56) Entgegenhaltungen:
- JP-A- 07 122 862
- US-B1- 6 229 090

## Beschreibung

Die Erfindung betrifft einen Kabelhalter für Flachbandkabel mit einem Kabelpfad zum Aufnehmen und Führen und Haltemittel zum Befestigen eines Flachbandkabels sowie einer Anordnung aus einem solchen Kabelhalter und einem Flachbandkabel (siehe JP-A-07122862).

Zum Befestigen von Kabeln an einer Tragstruktur werden vielfach Kabelhalter eingesetzt. Sie dienen einerseits zum Befestigen des Kabels an der Tragstruktur, um dadurch unerwünschte Bewegungen des Kabels und die damit einhergehende Gefahr einer Beschädigung des Kabels durch Aufscheuern zu vermeiden, und andererseits zum Führen des Kabels, um ihm einen definierten Verlauf an der Tragstruktur zu geben. Durch den zunehmenden Einsatz von Elektronik und der steigenden Komplexität der dabei verwendeten elektronischen Systeme, ist die Anzahl der erforderlichen Kabelverbindungen stark angestiegen. Um dadurch den bedingten Verkabelungsaufwand zu verringern, werden in verstärktem Maße Flachbandkabel eingesetzt. Sie finden heutzutage auch in Bereichen Anwendung, in denen vor kurzem noch Einzeldrahttechnik vorherrschend war, wie bspw. bei der Verkabelung von Kraftfahrzeugen. Eine Verkabelung mit Flachbandkabeln verringert aber nicht nur den Aufwand bei der Verlegung, sondern sie beansprucht auch deutlich weniger Bauraum verglichen mit einer herkömmlichen Verkabelung in Einzeldrahttechnik. Zur Befestigung der Flachbandkabel an Tragstrukturen sind spezielle Flachbandkabelhalter entwickelt worden. Aus offenkundiger Vorbenutzung sind solche Flachbandkabelhalter bekannt, die im wesentlichen zweiteilig aus einem Bodenteil und einem Deckelteil aufgebaut sind, welche mittels eines Biegescharniers ausklappbar miteinander verbunden sind. Zur Befestigung des Halters an der Tragstruktur ist eine Klebe- oder Steckbefestigung an dem Bodenteil vorgesehen. Nachteilig an diesen bekannten Kabelhaltern für Flachbandkabel ist, daß aufgrund des klappbaren Deckelteils viel Bauraum erforderlich ist. Verlegung der Flachbandkabel in Kurven oder Abtrennen von Teilsträngen ist schwierig. Eine umständliche und unflexible Kabelverlegung ist die Folge.

Der Erfindung liegt die Aufgabe zugrunde, einen Kabelhalter der eingangs genannten Art zu schaffen, der bei weniger Aufwand eine gleiche oder höhere Befestigungssicherheit bietet.

Die erfindungsgemäße Lösung liegt in einem Kabelhalter für Flachbandkabel mit den Merkmalen des Anspruchs 1, einem Satz von solchen Kabelhaltern sowie einer Anordnung aus einem solchen Kabelhalter und einem Flachbandkabel gemäß Anspruch 13 bzw. 14. Vorteilhafte Weiterbildungen ergeben sich aus den Unteransprüchen.

Erfindungsgemäß sind bei einem Kabelhalter für Flachbandkabel mit einem Kabelpfad zum Aufnehmen und Führen und Haltemitteln zum Befestigen eines Flachbandkabels Umlenkmittel vorgesehen, die so ausgestaltet sind, daß der Kabelpfad von den Haltemitteln über die Umlenkmittel zu den Haltemitteln geführt ist.

Zunächst seien einige verwendete Begriffe erläutert:
Unter einem Flachbandkabel wird ein flacher Kabelstrang verstanden, der aus einer Mehrzahl parallel nebeneinander angeordneter und miteinander verbundener Adern besteht. Bedingt durch diese Anordnung und durch die Flexibilität des Kabelmaterials ist das Flachbandkabel um seine Querachse leicht biegbar, während es um seine Hoch-/Längsachse nur kaum bzw. schwer verdrehbar ist.

Unter einem Kabelpfad wird der Raum verstanden, der in einem Kabelhalter zur Führung des Kabels vorgesehen ist. Der Kabelpfad kann so verlaufen, daß das Kabel im wesentlichen in derselben Richtung dem Kabelhalter zugeführt und von ihm weggeführt wird (Geradhalter) oder umgelenkt wird (Winkelhalter).

Bei einem Winkelhalter wird der Winkel, den der zuführende und der wegführende Kabelabschnitt einschließen, als Knickwinkel bezeichnet.

Der erfindungsgemäße Kabelhalter erlaubt raumsparende und außerdem sichere Befestigung eines in den Kabelhalter eingebrachten Flachbandkabels. Das Flachbandkabel wird durch die Umlenkung an den Umlenkmitteln elastisch gebogen und erzeugt somit zwei unterschiedliche Kräfte, die jeweils haltend wirken. Zum einen wird eine Reibkraft zwischen den Flachbandkabel und dem Umlenkmittel erzeugt, die ein Gleiten des Kabels aus seiner ursprünglichen Position verhindern. Zum anderen widersetzt sich das Flachbandkabel einer unerwünschten Vor- oder Zurückbewegung, wie sie bspw. durch Zug an einem Kabelstrang entstehen kann, durch seinen Verformungswiderstand, der dem für eine Bewegung des Flachbandkabels erforderlichen Wandern der Umlenkstelle entgegenwirkt. Außerdem wird durch den zu den Haltemitteln zurückgeführten Kabelpfad erreicht, daß das Flachbandkabel zweimal durch die Haltemittel geführt ist. Dadurch erlaubt der erfindungsgemäße Kabelhalter eine Befestigungseinheit, die mindestens so hoch ist wie bei den vorbekannten Kabelhaltern. Da bei dem erfindungsgemäßen Kabelhalter die Halte- und Umlenkmittel nicht klappbar, sondern starr, sind, ist viel weniger Bauraum erforderlich.

Durch die Umlenkmittel wird ferner erreicht, daß der Kabelpfad einen hin- und einen rücklaufenden Abschnitt aufweist, und so überschüssige Kabellänge in der Halterung aufgenommen werden kann. Je nach dem Abstand der Umlenkmittel von den Haltemitteln können unterschiedliche Kabellängen auf diese Weise in dem Kabelhalter gespeichert werden. Das bringt den überraschenden Vorteil mit sich, daß mit einer Kabellänge unterschiedliche Distanzen überbrückt werden können.

Die Haltemittel und/oder Umlenkmittel sind zweckmäßigerweise als quer zum Kabelpfad zinkenartig angeordnete Arme ausgebildet. Durch diese Ausführung ist der Umlenkarm von einer Seite her frei zugänglich, so daß das Flachbandkabel besonders einfach bei der Montage um die Umlenkmittel geführt werden kann. Zweckmäßig ist es, wenn die Haltemittel einen freitragenden Klemmarm und ein Gegenlager umfassen. Dadurch kann das Kabel (genauso) einfach in die Haltemittel eingesetzt werden wie es um den Umlenkarm geführt werden kann. Dabei ist es von Vorteil, wenn der Klemmarm und der Umlenkarm gleichsinnig angeordnet sind. Dadurch sind ihre freien Enden auf einer Seite des Kabelhalters, so daß von dieser Seite das Flachbandkabel besonders einfach in den Kabelhalter eingelegt werden kann. Es ist aber auch denkbar, die Anordnung der Arme gegensinnig zu wählen. Damit ergibt sich eine besonders sichere Befestigung des Flachbandkabels in dem Kabelhalter, wie sie besonders zur Überbrückung größerer Distanzen von Vorteil ist. Außerdem ist damit eine besonders flache Bauweise des Kabelhalters ermöglicht.

Zweckmäßigerweise sind die Halte- und Umlenkmittel so angeordnet, daß der Kabelpfad zickzackartig geführt ist. Dadurch ist ein sehr flacher Aufbau des erfindungsgemäßen Kabelhalters ermöglicht. In der Regel beträgt die Bauhöhe des Kabelhalters nur das Drei- bis Fünffache der Dicke des Flachbandkabels. Bei einer zweckmäßigen Ausführungsform ist der Kabelhalter als Winkelhalter ausgeführt, dessen Kabelpfad einen Knickwinkel von vorzugsweise höchstens 90° aufweist. Vorteilhafterweise sind mindestens zwei Haltemittel vorgesehen, die um den Knickwinkel versetzt zueinander angeordnet sind. Dadurch wird es ermöglicht, das Flachbandkabel nicht nur gerade zu verlegen, sondern auch um einen bestimmten Winkel umzulenken. Vorzugsweise sind die Umlenkmittel um jeweils den halben Knickwinkel versetzt zu den Haltemitteln angeordnet. Dadurch wird die Gefahr eines unerwünschten Knickens des Flachbandkabels und damit eine maximale Schonung des Flachbandkabel erreicht. Dabei bleiben die flache Bauweise und die daraus resultierenden Vorteile hinsichtlich Bauraum erhalten.

Zweckmäßigerweise sind mindestens zwei Umlenkmittel vorgesehen, die im Kabelpfad vor und hinter den Haltemitteln angeordnet sind. Dadurch kann das Flachbandkabel von beiden Seiten dem Kabelhalter zugeführt werden. Gewünschtenfalls kann eine doppelte Umlenkung vorgenommen werden, indem das Kabel über beide Umlenkmittel geführt wird. Dadurch ergibt sich eine noch sicherere Befestigung. Außerdem kann auf diese Weise mehr Kabellänge in dem Kabelhalter gespeichert werden. Vorteilhafterweise sind die Umlenkmittel in ihrem Abstand zu den Haltemitteln verstellbar ausgeführt. Dadurch kann eine Veränderung der in dem Kabelhalter gespeicherten Kabellänge leicht durch Verstellen der Umlenkmittel durchgeführt werden. Dies hat den Vorteil, daß die Kabellänge um ein variables Maß länger als die zu überbrückende Distanz sein kann.

Vorteilhafterweise weisen die Haltemittel Haltekeile zur Fixierung des Flachbandkabels auf. Die Haltekeile verhindern mit ihrer dem Kabelpfad zugewandten Stirnfläche, daß das Flachbandkabel sich seitlich aus dem Kabelpfad herausbewegen kann.

Zweckmäßigerweise sind Halteorgane, vorzugsweise Klebemittel, zum Befestigen an einer Tragstruktur vorgesehen. Mit den Halteorganen kann der erfindungsgemäße Kabelhalter an der Tragstruktur oder Elementen davon befestigt werden. Besonders vorteilhaft sind Klebebänder als Klebemittel, da sie eine sehr flache Befestigung ermöglichen.

Die Erfindung erstreckt sich auch auf einen Satz von Kabelhaltern, die jeweils einen unterschiedlichen Abstand zwischen den Umlenkmitteln und den Haltemitteln aufweisen. Mit einem solchen Satz können unterschiedliche Distanzen unter Verwendung von Flachbandkabel einheitlicher Länge überbrückt werden.

Die Erfindung erstreckt sich ferner auf eine Anordnung aus einem Flachbandkabel und einem Kabelhalter, bei der das Flachbandkabel in einem vorlaufenden Abschnitt durch die Haltemittel, um die Umlenkmittel und in einem rücklaufenden Abschnitt von den Umlenkmitteln zu den Haltemitteln geführt ist. Wie bereits vorstehend beschrieben, kann auf diese Weise ein Teil der Kabellänge in dem Kabelhalter aufgenommen werden, so daß zum einen eine sichere und bessere Befestigung und zum anderen eine Anpaßbarkeit der Kabellänge an die zu überbrückende Distanz ermöglicht ist. Dabei kann es vorteilhaft sein, wenn nur ein Teil des Flachbandkabels um die Umlenkmittel zu den Haltemitteln zurückgeführt ist und ein anderer Teil des Flachbandkabels von den Umlenkmitteln weggeführt ist. Auf diese Weise wird zum einen eine sichere Befestigung des Flachbandkabels und zum anderen eine Aufteilung des Flachbandkabels in zwei Teilstränge erreicht. Damit werden gesonderte Elemente, die ein Flachbandkabel in zwei Teilstränge aufspalten und es fixieren, überflüssig. Dies kann mit den erfindungsgemäßen Kabelhaltern ohne weiteres erreicht werden.

Die Erfindung wird nachfolgend unter Bezugnahme auf die beigefügte Zeichnung näher beschrieben, in der vorteilhafte Ausführungsbeispiele dargestellt sind. Es zeigen:
- Fig. 1: eine perspektivische Ansicht eines ersten Ausfüh- rungsbeispiels eines erfindungsgemäßen Kabelhal- ters;
- Fig. 2: eine perspektivische Ansicht eines zweiten Ausfüh- rungsbeispiels;
- Fig. 3: eine Schnittansicht des ersten Ausführungsbei- spiels;
- Fig. 4: eine Schnittansicht wie in Fig. 3 mit eingelegtem Flachbandkabel;
- Fig. 5: eine perspektivische Ansicht eines dritten Ausfüh- rungsbeispiels; und
- Fig. 6: eine perspektivische Ansicht eines vierten Ausfüh- rungsbeispiels.

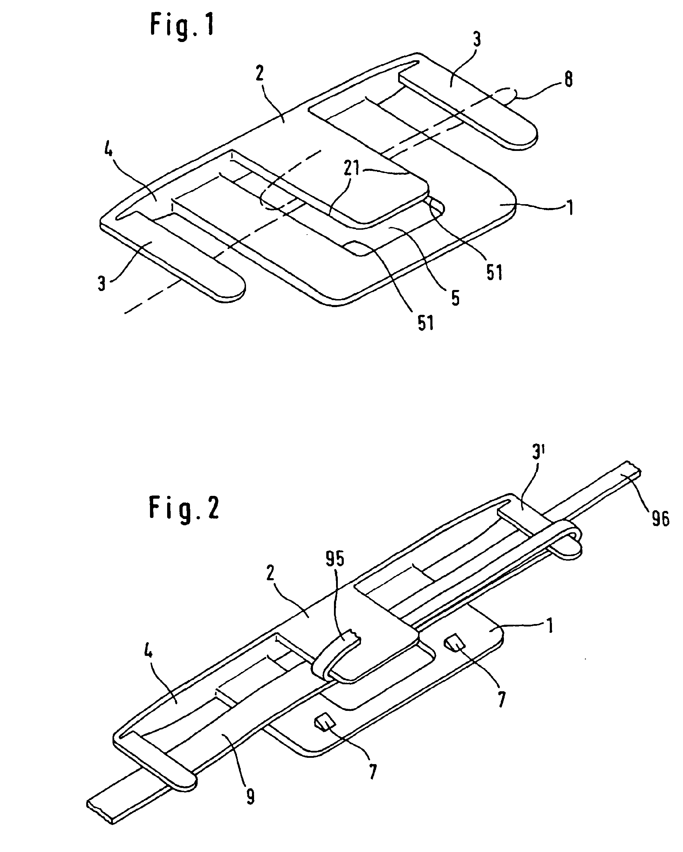

In den Fig. 1 bis 4 sind Ausführungsbeispiele der vorliegenden Erfindung dargestellt, die als Geradhalter ausgeführte Kabelhalter darstellen. Die Kabelhalter weisen eine Grundplatte 1, eine Begrenzungsleiste 4, einen Klemmarm 2 sowie zwei Umlenkarme 3 auf.

Die Begrenzungsleiste 4 erstreckt sich über eine gesamte Seitenkante der Grundplatte 1 und an beiden Enden darüber hinaus. Der Klemmarm 2 und die Umlenkarme 3 sind zinkenartig an der Begrenzungsleiste 4 quer zum Kabelführungspfad 8 angeordnet. Der Klemmarm 2 ist so an dem oberen Bereich der Begrenzungsleiste 4 angeordnet, daß er sich etwa in der Mitte der Grundplatte 1 parallel über nahezu die gesamte Breite der Grundplatte 1 erstreckt. Zwischen dem Haltearm 2 und der Grundplatte 1 entsteht dadurch ein flacher Spalt, dessen Höhe auf die Dicke des von dem Kabelhalter aufzunehmenden Flachbandkabels 9 abgestimmt ist.

An den jeweiligen Enden der Begrenzungsleiste 4 sind außerhalb des Bereichs der Grundplatte 1 die beiden Umlenkarme 3 angeordnet. Die Umlenkarme 3 sind parallel zu dem Haltearm 2 und der Grundplatte 1 ausgerichtet. Bezogen auf die Höhe des Haltearms 2 über der Grundplatte 1 sind die Umlenkarme 3 auf etwa halber Höhe angeordnet. Sie befinden sich dadurch in der Flucht des Spalts zwischen Haltearm 2 und Grundpatte 1. Die Umlenkarme 3 sind an ihrem freien Ende verrundet, um ein leichteres Einsetzen des Flachbandkabels 9 in den Kabelhalter zu ermöglichen. Der Abstand, mit dem die Umlenkarme 3 von dem Haltearm 2 angeordnet sind, kann nach Belieben gewählt sein, ist jedoch vorzugsweise mindestens so groß wie die Breite des in den Kabelhalter aufzunehmenden Flachbandkabels 9. Ein solches Ausführungsbeispiel ist in Fig. 1 dargestellt; bei dem in Fig. 2 dargestellten Ausführungsbeispiel sind die Umlenkarme 3' mit einem Abstand von etwa dem Vierfachen der Breite des Flachbandkabels 9 angeordnet.

Der zur Aufnahme des Flachbandkabels 9 vorgesehene Raum ist als Kabelpfad 8 dargestellt. Er verläuft über die Grundplatte 1 unter dem Haltearm 2 zum Umlenkarm 3 um diesen herum zu dem Haltearm 2 zurück.

Ferner können, wie in Fig. 2 dargestellt ist, Haltekeile 7 auf der Grundplatte 1 angeordnet sein. Die Keile weisen ein asymmetrisches Profil mit einer verhältnismäßig steil stehenden Stirnseite, die nach innen zu dem Kabelpfad 8 gerichtet ist, und einer verhältnismäßig flachen Rückseite auf, die nach außen gerichtet ist. Durch die flache Rückseite ist ein leichtes Einsetzen des Flachbandkabels 9 in den Kabelhalter ermöglicht, während die verhältnismäßig steil stehende Stirnseite das in den Kabelhalter eingelegte Flachbandkabel 9 am Herausrutschen hindert. Dadurch erhöht sich die Befestigungssicherheit des Flachbandkabels in dem Halter weiter.

Die Grundplatte 1 kann massiv ausgeführt sein oder sie kann, wie in den dargestellten Ausführungsbeispielen abgebildet, eine Öffnung 5 aufweisen, deren Rand 51 mit der Kontur des Haltearms 2 nahezu identisch übereinstimmt. Die Grundplatte 1 bzw. der Rand 51 bilden das Gegenlager für den Klemmarm 2. Mit der Öffnung 5 in der Grundplatte 1 wird erreicht, daß die von dem Klemmarm 2 ausgeübte Haltekraft vornehmlich an den Außenkanten 21 des Haltearms 2 sowie dem Rand 51 der Öffnung 5 auf das in den Kabelhalter einzuführende Flachbandkabel 9 übertragen wird. Dadurch ergibt sich an den Kontaktstellen zu dem Flachbandkabel 9 eine verhältnismäßig hohe Flächenpressung, wodurch sich die Haltewirkung erhöht. Die Öffnung 15 erlaubt außerdem mehr Spielraum hinsichtlich der Dicke der von dem Kabelhalter aufzunehmenden Flachbandkabel 9. Ist nämlich die Dicke des einzulegenden Flachbandkabels größer als durch den Spaltabstand zwischen Haltearm 2 und Grundplatte 1 vorgegeben, so kann das Flachbandkabel 9 in dem Bereich unter dem Haltearm 2 etwas in Richtung der Öffnung 5 ausweichen. Dabei wird über dem Haltearm 2 und dem Rand 51 eine für eine sichere Befestigung ausreichend große Haltekraft auf das Flachbandkabel 9 ausgeübt. Die Öffnung 5 hat ferner den Vorteil, daß sie zur Materialersparnis führt. Abhängig von dem Material, aus dem der erfindungsgemäße Kabelhalter ausgeführt ist, kann der Haltearm 2 auf sehr einfache Weise durch Ausstanzen des inneren Bereichs der Grundplatte 1 hergestellt werden, so daß eine entsprechende Öffnung 5 in der Grundplatte 1 verbleibt. Ist der Kabelhalter aus Kunststoffmaterial hergestellt, so besteht außerdem noch der Vorteil, daß dank der Öffnung 5 eine einfache zweigeteilte Matrize mit einem Unterstempel und einem Oberstempel zur Herstellung des erfindungsgemäßen Kabelhalters völlig ausreichend ist.

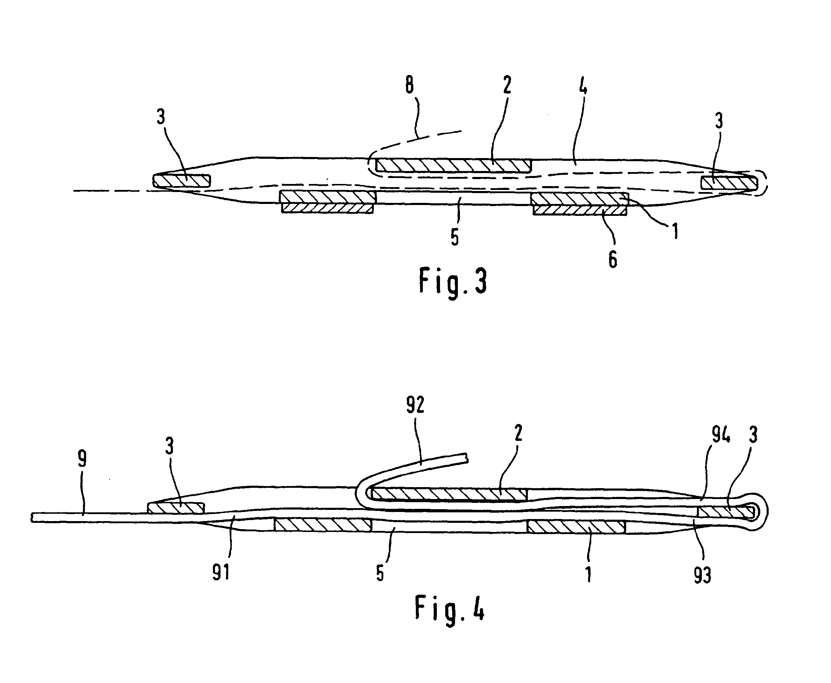

In den Fig. 3 und 4 sind seitliche Schnittansichten des in Fig. 1 dargestellten Ausführungsbeispiels gezeigt. In Fig. 3 ist der Kabelhalter alleine, in Fig. 4 zusammen mit dem eingelegten Flachbandkabel 9 dargestellt. Wie man erkennt, ist das Flachbandkabel 9 mit einem einlaufenden Abschnitt 91 unter einem Umlenkarm 3, der in diesem Bereich lediglich als zusätzlicher Stützarm fungiert, über den in der Figur links dargestellten Bereich der Grundplatte 1 durch den Spalt unter dem Haltearm 2 geführt. Eingeklemmt zwischen dem Haltearm 2 und der Grundplatte 1 läuft das Flachbandkabel 9 weiter über die Öffnung 5 und Grundplatte 1 in einem unteren Faltungsabschnitt 93 zu dem Umlenkarm 3 hin, um den es in einen von den Eigenschaften des Flachbandkabels 9 abhängigen Krümmungsradius geführt ist. Dann läuft es in einen oberen Faltungsabschnitt 94 zu dem von Grundplatte 1 und dem Haltearm 2 gebildeten Haltemittel zurück. In dem Klemmbereich zwischen der Grundplatte 1 und dem Haltearm 2 bis hin zu dem in der Darstellung rechten Umlenkarm 3 ist das Flachbandkabel 9 also doppelt geführt, nämlich einmal mit dem unteren Faltungsabschnitt 93 und zum anderen mit dem oberen Faltungsabschnitt 94. Durch die doppelte Führung des Flachbandkabels 9 in dem unteren und oberen Faltungsabschnitt 93, 94 wird ein gewisser Längenabschnitt des Flachbandkabels 9 in den Kabelhalter aufgekommen. Um welche Kabellänge es sich dabei handelt, ist durch den Abstand zwischen dem Haltearm 2 und dem Umlenkarm 3 bestimmt. Mit der doppelten Führung des Flachbandkabels 9 in dem Kabelhalter kann aber nicht nur eine gewisse Kabellänge gespeichert werden, sondern es ergibt sich durch die doppelte Führung des Kabels 9 im Klemmbereich zwischen dem Haltearm 2 und der Grundplatte 1 auch eine besonders sichere Befestigung des Flachbandkabels 9 am Kabelhalter.

Wie man in Fig. 4 erkennen kann, ermöglicht die Öffnung 5 ein gewisses Ausweichen des in diesem Bereich doppelt geführten Flachbandkabels, so daß Flachbandkabel mit einer Dicke verwendet werden können, die größer ist als der eigentliche Spalt zwischen dem Haltearm 2 und der Grundplatte 1. Eine sichere Befestigung wird dennoch durch die an den Rändern des Haltearms 2 und den Rand 51 der Öffnung 5 ausgeübten Haltekräfte erzielt.

Indem erfindungsgemäß ein Satz von Kabelhaltern mit verschiedenen Abständen zwischen dem Haltearm 2 und dem Umlenkarm 3 vorgesehen sind (siehe Fig. 1 und 2), können unterschiedliche Kabellängenabschnitte in den Kabelhalter aufgenommen werden, so daß mit einem Kabel vorgegebener Länge unterschiedliche Distanzen überbrückt werden können.

Zur Befestigung des Kabelhalters an einer Tragstruktur (nicht dargestellt), wie bspw. einem Karosserieblech, sind Klebeelemente 6 an der von dem Haltearm 2 abgewandten Unterseite der Grundplatte 1 vorgesehen. Damit wird eine sichere und gleichzeitig sehr flache Befestigung des Kabelhalters an der Tragstruktur erreicht. Insgesamt ergibt sich somit ein Kabelhalter, der ausgesprochen flach baut und daher auch unter beengten Raumverhältnissen Anwendung finden kann.

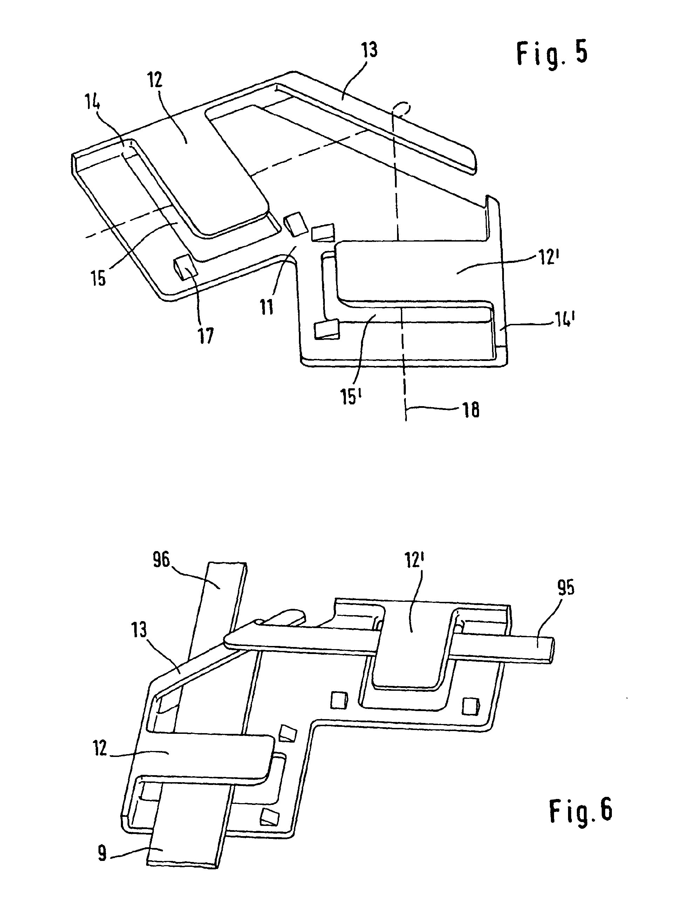

In den Fig. 5 und 6 sind weitere Ausführungsbeispiele der vorliegenden Erfindung dargestellt. Hierbei handelt es sich um Winkelhalter, die zur Führung des von ihnen gehaltenen Flachbandkabels um Ecken dienen. Sie unterscheiden sich von dem Kabelhalter gemäß des in Fig. 1 und 2 dargestellten Ausführungsbeispiels vor allem dadurch, daß nur ein Umlenkarm 13 und dafür zwei Haltearme 12, 12' auf einer Grundplatte 11 vorgesehen sind. Die Haltearme 12, 12' sind winklig zueinander versetzt angeordnet. Der Winkel, den die beiden Haltearme 12, 12' zueinander einnehmen, entspricht dabei dem Winkel, um den das Kabel umgelenkt wird (Knickwinkel). Entsprechend zu den Haltearmen 12, 12' sind die Begrenzungsleisten 14, 14' ebenfalls zweiteilig und um denselben Winkel versetzt zueinander angeordnet. Unter den Haltearmen 12, 12' befinden sich jeweils Öffnungen 15, 15' in der Grundplatte 11.

Eine weitere Besonderheit des winkligen Kabelhalters besteht darin, daß der Umlenkarm 13 nicht parallel zu einem der Haltearme 12, 12' angeordnet ist, sondern er ist vielmehr im Verhältnis zu beiden Haltearmen um einen Winkel versetzt angeordnet, der halb so groß ist wie der Winkel, um den die beiden Haltearme 12, 12' zueinander versetzt sind. Bei diesem Winkelhalter verläuft der Kabelführungspfad also winklig von dem ersten Haltearm 12 über den Umlenkarm 13 zu dem zweiten Haltearm 12'. Für eine möglichst verdrillarme Führung des Flachbandkabels ist der Umlenkarm 13 zweckmäßigerweise so angeordnet, daß seine von den Haltearmen 12, 12' abweisende Kante genau im Schnittpunkt des unter dem Haltearm 12 durchlaufenden Teils des Kabelpfads und dem unter dem Haltearm 12' laufenden Teils des Kabelpfads ist.

Der Kabelpfad 18 läuft dann entsprechend von dem Haltemittel 12 zu dem Umlenkmittel 13, um dieses herum zurück zu den Haltemitteln, und zwar zu dem Haltemittel 12'. Dadurch wird eine abgewinkelte Führung des Flachbandkabels 9 erreicht.

Der Winkel, den die beiden Teile des Kabelpfads miteinander einschließen, ist der Knickwinkel. Bei dem in Fig. 3 dargestellten Ausführungsbeispiel beträgt dieser etwa 65°; bei dem Ausführungsbeispiel gemäß Fig. 4 90°. Weitere Abstufungen, bspw. 75 ° können vorgesehen sein; ebenso stumpfwinklige Knickwinkel von bspw. 135°.

Die Halte- (3, 12) und Umlenkarme (2, 13) sind starr befestigt. Vorzugsweise ist der erfindungsgemäße Kabelhalter einstückig ausgeführt. Das erlaubt eine besonders einfache Herstellung.

Bei der Anordnung des Flachbandkabels in dem erfindungsgemäßen Kabelhalter ist es nicht unbedingt erforderlich, das Flachbandkabel über die gesamte Breite von den Umlenkmitteln zu den Haltemitteln zu führen. Ein Teil des Flachbandkabels kann auch von den Umlenkmitteln direkt abgeführt werden. Es ergibt sich auf diese Weise eine einfache Teilung des Flachbandkabels 9 in zwei Teilstränge 95, 96. Die bei dem erfindungsgemäßen Kabelhalter durch die Umlenkmittel bewirkten Vorteile kommen allerdings nur für den Teilstrang 95 zum Tragen, der von den Umlenkmitteln wieder zu den Haltemitteln geführt ist. Eine solche Anordnung mit zwei Teilsträngen ist in Fig. 2 und 6 dargestellt.

## Patentansprüche

1. Kabelhalter für Flachbandkabel (9) mit einem Kabelpfad (8) zum Aufnehmen und Führen und Haltemitteln (2, 12, 12') zum Befestigen eines Flachbandkabels (9), **dadurch gekennzeichnet, daß** Umlenkmittel (3, 13) vorgesehen sind, die so angeordnet sind, daß der Kabelpfad (8) von den Haltemitteln (2, 12) über die Umlenkmittel (3, 13) zu den Haltemitteln (2, 12') geführt ist.

2. Kabelhalter nach Anspruch 1, **dadurch gekennzeichnet, daß** die Haltemittel (2) und/oder die Umlenkmittel (3) als quer zum Kabelpfad zinkenartig angeordnete Arme ausgebildet sind.

3. Kabelhalter nach Anspruch 1 oder 2, **dadurch gekennzeichnet, daß** die Halte- und Umlenkmittel (2, 3) so angeordnet sind, daß der Kabelpfad (8) zickzackartig geführt ist.

4. Kabelhalter nach Anspruch 1 oder 2, **dadurch gekennzeichnet, daß** er als Winkelhalter ausgeführt ist, dessen Kabelpfad (18) einen Knickwinkel von vorzugsweise höchstens 90° aufweist.

5. Kabelhalter nach Anspruch 4, **dadurch gekennzeichnet, daß** mindestens zwei Haltemittel (12, 12') vorgesehen sind, die um den Knickwinkel zueinander versetzt angeordnet sind.

6. Kabelhalter nach Anspruch 5, **dadurch gekennzeichnet, daß** die Umlenkmittel (13) jeweils um den halben Knickwinkel zu den Haltemitteln (12, 12') versetzt angeordnet sind.

7. Kabelhalter nach einem der Ansprüche 1 bis 6, **dadurch gekennzeichnet, daß** die Haltemittel einen Klemmarm (2) und ein Gegenlager (1) umfassen.

8. Kabelhalter nach einem der Ansprüche 1 bis 7, **dadurch gekennzeichnet, daß** mindestens zwei Umlenkmittel (3) vorgesehen sind, die im Kabelpfad (8) vor und hinter den Haltemitteln (2) angeordnet sind.

9. Kabelhalter nach Anspruch 8, **dadurch gekennzeichnet, daß** die Umlenkmittel (3) symmetrisch zu den Haltemitteln (2) angeordnet sind.

10. Kabelhalter nach einem der Ansprüche 1 bis 9, **dadurch gekennzeichnet, daß** die Umlenkmittel (3) in ihrem Abstand zu den Haltemitteln (2) verstellbar ausgeführt sind.

11. Kabelhalter nach einem der Ansprüche 1 bis 10, **dadurch gekennzeichnet, daß** die Haltemittel Haltekeile (7) zur Fixierung des Flachbandkabels (9) aufweisen.

12. Kabelhalter nach einem der Ansprüche 1 bis 3, **dadurch gekennzeichnet, daß** Halteorgane, insbesondere Klebemittel (6), zum Befestigen an einer Tragstruktur vorgesehen sind.

13. Satz von Kabelhaltern nach einem der Ansprüche 1 bis 12, **dadurch gekennzeichnet, daß** die Kabelhalter jeweils einen unterschiedlichen Abstand zwischen den Umlenkmitteln (3) und den Haltemitteln (2) aufweisen.

14. Anordnung aus einem Flachbandkabel und einem Kabelhalter nach einem der Ansprüche 1 bis 13, **dadurch gekennzeichnet, daß** das Flachbandkabel (9) in einem vorlaufenden Abschnitt (93) durch die Haltemittel (2), um die Umlenkmittel (3) und in einem rücklaufenden Abschnitt (94) wieder durch die Haltemittel (2) geführt ist.

15. Anordnung aus einem Flachbandkabel und einem Kabelhalter nach Anspruch 13, **dadurch gekennzeichnet, daß** nur ein Teil des Flachbandkabels um die Umlenkmittel (3) zu den Haltemitteln zurückgeführt ist und ein anderer Teil des Flachbandkabels (9) von den Umlenkmitteln (3) weggeführt ist.

## Claims

1. Cable holder for flat ribbon cable (9), having a cable path (8) for accommodating and guiding a flat ribbon cable (9) and holding means (2, 12, 12') for securing the latter, **characterized in that** deflecting means (3, 13) are provided and are arranged such that the cable path (8) is guided by the holding means (2, 12) to the holding means (2, 12') via the deflecting means (3, 13).

2. Cable holder according to Claim 1, **characterized in that** the holding means (2) and/or the deflecting means (3) are designed as arms arranged transversely to the cable path in the manner of prongs.

3. Cable holder according to Claim 1 or 2, **characterized in that** the holding and deflecting means (2, 3) are arranged such that the cable path (8) is guided in the manner of a zigzag.

4. Cable holder according to Claim 1 or 2, **characterized in that** it is designed as an angle holder, the cable path (18) of which has a bending angle of preferably at most 90°.

5. Cable holder according to Claim 4, **characterized in that** at least two holding means (12, 12') are provided and are arranged offset with respect to one another by the bending angle.

6. Cable holder according to Claim 5, **characterized in that** the deflecting means (13) are arranged offset with respect to the holding means (12, 12') in each case by half the bending angle.

7. Cable holder according to one of Claims 1 to 6, **characterized in that** the holding means comprise a clamping arm (2) and an abutment (1).

8. Cable holder according to one of Claims 1 to 7, **characterized in that** at least two deflecting means (3) are provided and are arranged in the cable path (8) upstream and downstream of the holding means (2).

9. Cable holder according to Claim 8, **characterized in that** the deflecting means (3) are arranged symmetrically with respect to the holding means (2).

10. Cable holder according to one of Claims 1 to 9, **characterized in that** the spacing between the deflecting means (3) and the holding means (2) is designed to be adjustable.

11. Cable holder according to one of Claims 1 to 10, **characterized in that** the holding means have holding wedges (7) for fixing the flat ribbon cable (9).

12. Cable holder according to one of Claims 1 to 3, **characterized in that** holding members, in particular adhesive means (6), for securing to a support structure are provided.

13. Set of cable holders according to one of Claims 1 to 12, **characterized in that** the cable holders in each case have a different spacing between the deflecting means (3) and the holding means (2).

14. Arrangement consisting of a flat ribbon cable and a cable holder according to one of Claims 1 to 13, **characterized in that** the flat ribbon cable (9) is guided through the holding means (2) in a forward section (93), around the deflecting means (3) and back through the holding means (2) in a return section (94).

15. Arrangement consisting of a flat ribbon cable and a cable holder according to Claim 14, **characterized in that** only a part of the flat ribbon cable is guided back to the holding means around the deflecting means (3) and another part of the flat ribbon cable (9) is guided away from the deflecting means (3).

## Revendications

1. Support de câble pour câble plat (9), comportant un chemin de câble (8) pour recevoir et guider et des moyens de fixation (2, 12, 12') pour fixer un câble plat (9), **caractérisé en ce qu'**il est prévu des moyens de renvoi (3, 13) qui sont disposés de telle sorte que le chemin de câble (8) est guidé depuis les moyens de fixation (2, 12) vers les moyens de fixation (2, 12') en passant par les moyens de renvoi (3, 13).

2. Support de câble selon la revendication 1, **caractérisé en ce que** les moyens de fixation (2) et/ou les moyens de renvoi (3) sont réalisés sous forme de bras disposés comme des dents de fourche transversalement au chemin de câble.

3. Support de câble selon la revendication 1 ou 2, **caractérisé en ce que** les moyens de fixation (2) et les moyens de renvoi (3) sont disposés de telle sorte que le chemin de câble (8) est guidé en zigzag.

4. Support de câble selon la revendication 1 ou 2, **caractérisé en ce qu'**il est réalisé en forme de support angulaire, dont le chemin de câble (18) forme un angle de déviation mesurant de préférence 90° au maximum.

5. Support de câble selon la revendication 4, **caractérisé en ce qu'**il est prévu au moins deux moyens de fixation (12, 12') qui sont disposés en étant décalés l'un par rapport à l'autre selon l'angle de déviation.

6. Support de câble selon la revendication 5, **caractérisé en ce que** les moyens de renvoi (13) sont disposés respectivement en étant décalés par rapport aux moyens de fixation (12, 12') selon la moitié de l'angle de déviation.

7. Support de câble selon l'une quelconque des revendications 1 à 6, **caractérisé en ce que** les moyens de fixation comportent un bras de serrage (2) et une butée (1).

8. Support de câble selon l'une quelconque des revendications 1 à 7, **caractérisé en ce qu'**il est prévu au moins deux moyens de renvoi (3) qui sont disposés dans le chemin de câble (8) en amont et en aval des moyens de fixation (2).

9. Support de câble selon la revendication 8, **caractérisé en ce que** les moyens de renvoi (3) sont disposés symétriquement par rapport aux moyens de fixation (2).

10. Support de câble selon l'une quelconque des revendications 1 à 9, **caractérisé en ce que** les moyens de renvoi (3) sont réalisés de manière à pouvoir régler leur distance par rapport aux moyens de fixation (2).

11. Support de câble selon l'une quelconque des revendications 1 à 10, **caractérisé en ce que** les moyens de fixation comportent des cales de fixation (7) pour la fixation du câble plat (9).

12. Support de câble selon l'une quelconque des revendications 1 à 3, **caractérisé en ce qu'**il est prévu des organes de fixation, en particulier des adhésifs (6) pour la fixation à une structure de support.

13. Ensemble de supports de câble selon l'une quelconque des revendications 1 à 12, **caractérisé en ce que** les supports de câble ont chacun une distance différente entre les moyens de renvoi (3) et les moyens de fixation (2).

14. Système formé par un câble plat et un support de câble selon l'une quelconque des revendications 1 à 13, **caractérisé en ce que** le câble plat (9) dans un tronçon avant (93) est guidé à travers les moyens de fixation (2), autour des moyens de renvoi (3) et dans un tronçon de retour (94) à nouveau à travers les moyens de fixation (2).

15. Système formé par un câble plat et un support de câble selon la revendication 13, **caractérisé en ce que** seulement une partie du câble plat est renvoyée vers les moyens de fixation en passant autour des
moyens de renvoi (3) et une autre partie du câble plat (9) est guidée en s'éloignant des moyens de renvoi (3).
